# EUROPÄISCHE PATENTSCHRIFT

(11) **EP 2 295 649 B1**
(45) Veröffentlichungstag und Bekanntmachung des Hinweises auf die Patenterteilung: **24.07.2013**
(21) Anmeldenummer: 10171409.5
(22) Anmeldetag: 30.07.2010
(51) Int. Cl.: E03B 1/04

(54) **Anlage und Verfahren zur Wiederverwendung von Grauwasser**
Assembly and method for reusing greywater
Installation et procédé de réutilisation d'eau grise

(30) Priorität: 03.08.2009 DE 102009037169
(43) Veröffentlichungstag der Anmeldung: 16.03.2011
(73) Patentinhaber: Hansgrohe SE, 77761 Schiltach (DE)
(72) Erfinder: Erhardt, Marc, 77731 Willstätt (DE); Moosmann, Stefan, 78730 Lauterbach (DE)
(74) Vertreter: Patentanwälte Ruff, Wilhelm, Beier, Dauster & Partner

(56) Entgegenhaltungen:
- EP-A2- 1 967 658
- WO-A1-97/02388
- DE-A1- 3 427 205
- DE-A1- 3 500 130
- DE-A1- 19 740 061
- DE-U1- 9 218 367
- DE-U1- 29 901 820
- US-A- 5 403 498
- US-A1- 2004 168 992

## Beschreibung

Die Erfindung betrifft eine Anlage und ein Verfahren zur Wiederverwendung von Grauwasser gemäβ dem Oberbegriff von Anspruch 1 bzw 10.

Unter Grauwasser ist ein fäkalienfreies, gering verschmutztes Abwasser zu verstehen, wie es beispielsweise beim Duschen, Baden oder Händewaschen anfällt. Auch das aus einer Waschmaschine bei einem Spülgang stammende Wasser kann hierzu gezählt werden.

Grauwasser lässt sich für eine Zweitnutzung aufbereiten.

Es ist bereits ein Verfahren und eine Vorrichtung zur Wiederverwertung von Grauwasser bekannt, bei dem drei Behälter vorhanden sind, die hintereinander geschaltet sind. Das Wasser gelangt in den ersten Behälter, wo es behandelt wird, von dort in den zweiten Behälter, wo es weiterbehandelt wird, und von dort in den Betriebswasserbehälter, aus dem es entnommen wird (EP 732457 A1, DE 19740061 A1). Die drei Behälter stehen auf gleichem Niveau.

Ebenfalls bekannt ist eine Vorrichtung zur Wiederverwendung von Grauwasser, bei der die einzelnen Speicher in einer Baueinheit zusammengefasst sind (EP 894904 A1).

Bei den bekannten Anlagen ist ein relativ hohes Zulaufniveau vorhanden. Damit die Anlage an der Zulaufseite ohne Pumpe auskommen kann, muss sie unterhalb der Auslässe aus den Grauwasserquellen angeordnet werden, das heißt in der Regel im Keller. Dadurch entsteht der Nachteil, dass das Ablaufniveau unterhalb der örtlichen Rückstauebene liegen kann.

Weiterhin hat sich herausgestellt, dass bei ungünstigem Zuflussverhältnissen im allein zeitlich geregelten Dauerbetrieb unter Umständen Verschmutzungen von einer Reinigungsstufe in die nächste übertragen werden.

Ebenfalls bekannt ist eine Anlage und ein Verfahren zur Wiederverwendung von Grauwasser. Dabei ist ein Sammelbehälter vorhanden, aus dem das Wasser in einen Behandlungsbehälter oberhalb aller Verbraucher gepumpt wird. Aus dem Behandlungsbehälter gelangt das Wasser in die einzelnen Spülkästen der Toiletten **(**WO 97/02388 A1**).**

**Weiterhin bekannt ist eine Anlage zur Wasser-Zweifachnutzung (**DE 3427205 A1**). Hierbei ist der Behandlungsbehälter innerhalb des Sammelbehälters angeordnet.**

Der Erfindung liegt die Aufgabe zu Grunde, eine Anlage und ein Verfahren zu schaffen, die/das bei einfachem Aufbau die Nachteile der bisherigen Lösung überwindet.

Zur Lösung dieser Aufgabe schlägt die Erfindung eine Anlage mit den im Anspruch 1 genannten Merkmalen und/oder ein Verfahren mit den Merkmalen des Anspruchs 11 vor. Weiterbildungen der Erfindung sind Gegenstand der jeweiligen abhängigen Patentansprüche.

Durch die Anordnung des Sammelbehälters, in den das Grauwasser zunächst gelangen soll, unterhalb des Niveaus der beiden anderen Behälter kann dafür gesorgt werden, dass man an der Zulaufseite ohne Pumpen auskommt. Da die Pumpen wegen des zeitlich nicht vorhersehbaren Anfalls von Grauwasser immer auch mit Steuerungen zum Einschalten und Ausschalten der Pumpe versehen sind, spart man auch diese Steuerungen und die zugehörigen Sensoren. Der Sammelbehälter selbst dient nicht zur Behandlung des in ihm enthaltenen Grauwassers, macht es aber möglich, dass in dem Grauwasser enthaltende Feststoffe sich absetzen können. Weiterhin können dort Stoffe mit einer geringeren Dichte als Wasser, zum Beispiel Schaum, durch eine Tauchwand zurückgehalten werden.

Um die Anlage besonders Platz sparend anzuordnen, **ist** erfindungsgemäß vorgesehen, dass der Sammelbehälter unmittelbar unterhalb der beiden jeweils auf gleicher Höhe stehenden anderen Behälter angeordnet ist.

Für den Teil des Grauwassers, der aufgrund einer zu großen Verschmutzung oder zum Wegspülen von Ablagerungen nicht wieder verwendet werden kann, kann in Weiterbildung der Erfindung der Sammelbehälter einen mit einer Pumpe versehenen Auslass zu Kanalisation aufweisen. Dadurch kann auch überschüssiges Grauwasser entfernt werden.

In Weiterbildung der Erfindung kann vorgesehen sein, dass der Behandlungsbehälter einen ventilgesteuerten in den Sammelbehälter führenden Auslass aufweist. In dem Behandlungsbehälter wird ja eine Behandlung des Grauwassers in der Weise durchgeführt, dass sich bei der Reinigung Stoffe bilden, die sich absetzen. Diese abgesetzten Stoffe (Sedimente) können dann durch einfaches Öffnen des Ventils mithilfe des Wassers ausgespült werden, ohne dass hierzu eine Pumpe erforderlich ist. Das zum Spülen verwendete Wasser gelangt damit wieder in den Sammelbehälter, wo es dann, wenn die Verunreinigungen sich als Sedimente in den Sammelbehälter absetzen, für ein nochmaliges Zurückpumpen in den Behandlungsbehälter zur Verfügung steht. Durch eine beispielsweise täglich erfolgende Vollentleerung des Sammelbehälters kann dieser sauber gehalten werden.

Da sich auch in dem Betriebswasserbehälter noch Ablagerungen absetzen können, kann erfindungsgemäß in Weiterbildung der Erfindung auch der Betriebswasserbehälter einen Auslass aufweisen, der über ein Ventil gesteuert in den Sammelbehälter führt. Auch dieses Wasser, das schon eine sehr hohe Qualität aufweist, kann dann wieder in den Behandlungsbehälter zurückgeführt werden. Dadurch wird der Sammelbehälter gespült beziehungsweise gereinigt.

In Weiterbildung der Erfindung kann vorgesehen sein, dass zwischen dem Sammelbehälter und dem Behandlungsbehälter eine mit einer Pumpe versehene Versorgungsleitung vorgesehen ist, wobei die Pumpe mit einer Steuereinrichtung versehen ist. Die Steuereinrichtung kann die unterschiedlichsten Merkmale auswerten, um zu entscheiden, ob die Pumpe eingeschaltet werden soll oder nicht.

In nochmaliger Weiterbildung der Erfindung kann ebenfalls vorgesehen sein, dass zwischen dem Behandlungsbehälter und dem Betriebswasserbehälter eine mit einer Pumpe versehene Versorgungsleitung vorgesehen ist, wobei auch diese Pumpe mit einer Steuereinrichtung versehen ist.

Insbesondere kann vorgesehen sein, dass die Steuereinrichtung die Verweildauer des Wassers in dem Behandlungsbehälter derart steuert, dass während dieser Verweildauer der größte Teil der Verschmutzung abgebaut wurde und sich die Sedimente abgesetzt haben. Die Verweildauer kann anhand der Größe und der Form des Behandlungsbehälters und der Verunreinigung des Grauwassers bestimmt werden.

In nochmaliger Weiterbildung der Erfindung kann vorgesehen sein, dass die Versorgungsleitung zwischen dem Behandlungsbehälter und dem Betriebswasserbehälter über eine Entkeimungsanlage führt, beispielsweise eine UV-Lampe. Damit können diejenigen Keime abgetötet werden, die nicht durch die biologische Reinigung und Sedimentation entfernt wurden.

Es kann nun der Fall eintreten, dass aus dem Betriebswasserbehälter Wasser entnommen werden soll, obwohl aufgrund der festgelegten und gewünschten Verweildauer des Wassers in dem Behandlungsbehälter zurzeit kein Wasser in den Betriebsbehälter nachgefüllt werden kann. Um auch in diesem Fall die Anlage ohne Störung weiterzubetreiben, kann erfindungsgemäß vorgesehen sein, dass der Betriebsbehälter einem Trinkwassereinlass aufweist, der immer dann eingeschaltet wird, wenn ein solcher Fall auftritt.

Für eine korrekte und sinnvolle Behandlung in dem Behandlungsbehälter und zur Ermittlung der korrekten Verweildauer ist es sinnvoll, dass das Wasser eine bestimmte Höhe in dem Behandlungsbehälter einnimmt, um damit eine bestimmte Menge von Wasser vorzuhalten. Falls nun nicht ausreichend Grauwasser zum Nachfüllen aus dem Sammelbehälter zur Verfügung steht, kann erfindungsgemäß vorgesehen sein, dass der Auslass aus dem Betriebswasserbehälter, der eigentlich zur Entnahme des Wassers dient, eine Abzweigung in den Behandlungsbehälter aufweist. In diesem Fall kann also Wasser aus dem Betriebsbehälter in den Behandlungsbehälter nachgeführt werden. Falls in dem Betriebsbehälter nicht ausreichend Betriebswasser vorliegt, kann, wie bereits erwähnt, der Vorrat in dem Betriebsbehälter durch Trinkwasser ergänzt werden.

Der Behandlungsbehälter kann natürlich auch eine Notüberlauf aufweisen.

Zur Ermittlung der gewünschten Wasserstände können alle Behälter Wasserstandssensoren aufweisen, die minimale Werte und maximale Werte überwachen.

Das von der Erfindung vorgeschlagene Verfahren zur Wiederverwendung von Grauwasser geht so vor, dass das Grauwasser zunächst in den Sammelbehälter eingebracht, aus dem Sammelbehälter in den Behandlungsbehälter gepumpt wird, wo es eine bestimmte Verweildauer verbleibt, und aus dem Behandlungsbehälter in dem Betriebsbehälter gepumpt wird. Aus diesem kann es zur Wiederverwendung entnommen werden. Die Verweildauer in dem Behandlungsbehälter kann durch Unterbrechen der Zufuhr aus dem Sammelbehälter und/oder durch Unterbrechen der Entnahme aus dem Behandlungsbehälter in den Betriebsbehälter gesteuert werden.

Stellt sich während des Betriebs heraus, dass Grauwasser in den Sammelbehälter geliefert wird, eine Übergabe in den Behandlungsbehälter aber zurzeit nicht sinnvoll ist, weil die Verweildauer des Wassers in dem Behandlungsbehälter noch nicht erreicht ist, so kann dieses Wasser aus dem Sammelbehälter mithilfe einer Pumpe in die Kanalisation gepumpt werden. Diese Pumpe kann ebenfalls dazu dienen, zu stark verschmutztes Wasser oder Wasser zum herausspülen von Sedimenten in die Kanalisation abzupumpen.

Stellt sich während des Betriebs heraus, dass in dem Behandlungsbehälter zu wenig Wasser enthalten ist, dass aber wegen des Fehlens von Grauwasser kein Nachpumpen möglich ist, so kann in diesem Fall aus dem Betriebsbehälter stammendes Wasser in den Behandlungsbehälter gepumpt werden.

Erfindungsgemäß kann in Weiterbildung vorgesehen sein, dass in den an sich Klarwasser enthaltenden Betriebsbehälter auch Trinkwasser nachgefüllt wird, wenn eine Entnahme von Betriebswasser gefordert wird, aber nicht ausreichend Betriebswasser vorhanden ist.

Erfinfungsgemäβ **ist** vorgesehen, dass Sediment, das sich in dem Behandlungsbehälter aufgrund der Behandlung des dort vorhandenen Grauwassers bildet, durch die Öffnung eines Ventils in den Sammelbehälter ausgespült wird. Zum Spülen wird das in dem Behandlungsbehälter vorhandene Wasser verwendet. Dieses Wasser gelangt in den Sammelbehälter, von wo aus es wieder in den Behandlungsbehälter gepumpt werden kann oder in Abhängigkeit von der Verschmutzung in die Kanalisation eingeleitet wird.

Die gleiche Möglichkeit kann auch in dem Betriebswasserbehälter vorgesehen sein.

Durch das Spülen des Behandlungsbehälters und auch des Betriebswasserbehälters wird auch der Sammelbehälter gereinigt.

Als Behandlung in dem Behandlungsbehälter kommen beispielsweise die üblichen im Stand der Technik bekannten Verfahren infrage. Zusätzlich kann das von dem Behandlungsbehälter in den Betriebsbehälter gepumpte Wasser entkeimt werden, beispielsweise dadurch, dass die zwischen diesen beiden Behältern vorhandene Leitung über eine UV Entkeimungsanlage führt.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigt:

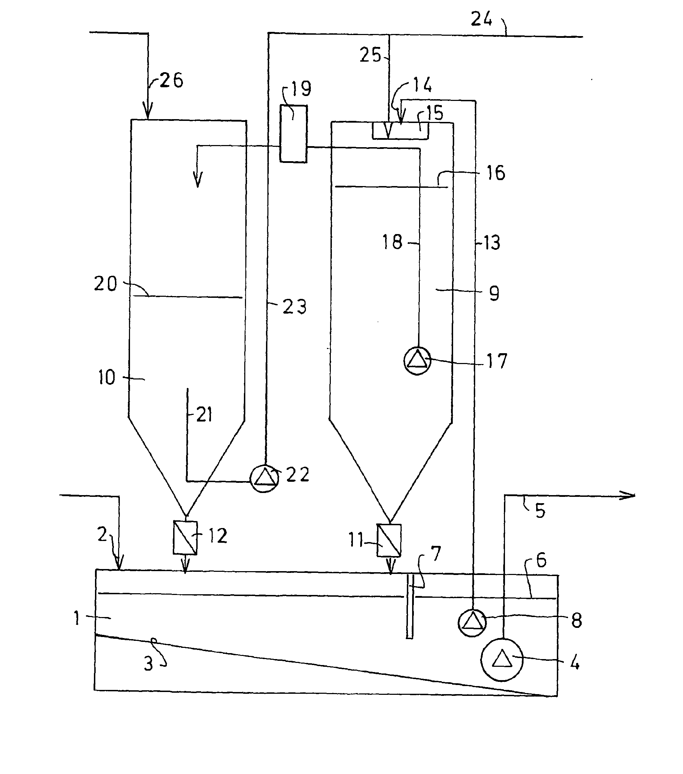

- Figur 1: schematisch eine von der Erfindung vorgeschlagene Anlage zur Wiederverwendung von Grauwasser.

Unten in der Figur ist ein Sammelbehälter 1 dargestellt. Es handelt sich um einen geschlossenen Behälter, der einen Einlass 2 aufweist, durch den das in einem bestimmten Haus oder einer Wohnung entstehende Grauwasser in den Sammelbehälter 1 gelangt. Der Sammelbehälter 1 weist einen abfallenden Boden 3 auf. Der Boden 3 fällt von der Stelle, wo der Einlass 2 angeordnet ist, in Richtung auf die gegenüberliegende Seite ab. An der Seite, wo der Boden 3 seine tiefste Stelle einnimmt, ist eine Pumpe 4 angeordnet, die das Wasser an dieser Stelle ansaugt und durch eine Auslassleitung 5 zur Kanalisation pumpen kann. Die Pumpe 4 kann durch eine Steuerung eingeschaltet werden, die unterschiedliche Kriterien berücksichtigen kann, beispielsweise einen minimalen und einen maximalen Wasserstand in dem Behälter 1. Der Wasserstand ist im dargestellten Beispiel durch die horizontale Linie 6 dargestellt. In dem Behälter 1 ist von dessen Deckel ausgehend eine Tauchwand 7 angeordnet, die in Richtung des abfallenden Bodens 3 vor der Pumpe 4 angeordnet ist und unter den Wasserspiegel 6 reicht. Über der zu der Kanalisation führenden Pumpe 4 ist eine zweite Pumpe 8 angeordnet, die ebenfalls durch eine Steuerung eingeschaltet werden kann.

Oberhalb des Sammelbehälters 1 sind zwei im dargestellten Beispiel mindestens annähernd gleiche Behälter angeordnet, nämlich rechts ein Behandlungsbehälter 9 und links ein Betriebsbehälter 10. Beide Behälter sind in ihrem Bodenbereich trichterförmig ausgebildet. An ihrer tiefsten Stelle ist ein Auslass vorhanden, der über ein Ventil 11, 12 in den Sammelbehälter 1 führt.

Die zweite Pumpe 8 in dem Sammelbehälter 1 ist über eine Versorgungsleitung 13 mit einem Einlass 14 in den Behandlungsbehälter 9 verbunden. Der Einlass 14 führt zunächst in ein nicht unbedingt erforderliches Filter 15, das im oberen Bereich des Behandlungsbehälters 9 angeordnet ist. In dem Behandlungsbehälter 9 steht das Wasser bis zu einer Wasserstandshöhe, die durch die horizontale Linie 16 angedeutet ist.

Im mittleren Bereich des Behandlungsbehälters 9 wird mit einer Pumpe 17 Wasser entnommen, die ebenfalls mit einer Steuerung verbunden ist und von dieser angesteuert wird. Die Pumpe pumpt das Wasser durch eine Versorgungsleitung 18, die aus dem Behandlungsbehälter 9 heraus in eine Entkeimungsanlage 19 und von dort in den Betriebswasserbehälter 10 führt.

In dem Betriebsbehälter 10 steht eine mehr oder weniger große Menge Wasser, angedeutet durch die horizontale Linie 20. In dem unteren Teil des Betriebsbehälters 10 oberhalb des Trichters mündet eine Leitung 21, die mit einer Pumpe 22 verbunden ist. Von der Pumpe 22 führt eine Leitung 23 zu der Entnahmestelle 24 für Betriebswasser, das heißt für gereinigtes und aufbereitetes Grauwasser. Von dieser Leitung 23 aus führt eine Abzweigung 25 in den Behandlungsbehälter 9. Die Abzweigung 25, die mit Wasser aus dem Betriebswasserbehälter 10 versorgt wird, kann auch dazu dienen, das Filter 15 zu spülen.

In den Betriebsbehälter 10 führt eine Leitung 26, die mit der normalen Wasserzuleitung verbunden ist, also mit einer Trinkwasserleitung. Durch diese Leitung 26 kann bei Bedarf Trinkwasser in den Betriebsbehälter 10 eingespeist werden.

Die in der Figur dargestellte Anlage arbeitet wie folgt. Das aus einem Haushalt oder einer anderen Quelle stammende Grauwasser gelangt über die Grauwasserleitung und den Einlass 2 in den Sammelbehälter, wo es sich zunächst sammelt. Der Wasserspiegel steigt nach und nach. Beim Aufenthalt in dem Sammelbehälter setzen sich Verunreinigungen, die schwerer sind als Wasser, auf dem Boden 3. Leichtstoffe (Schaum) werden durch die Tauchwand 7 zurückgehalten. Sobald der Wasserspiegel eine bestimmte Höhe erreicht hat, was durch einen Sensor festgestellt wird, und/oder die Steuerung meldet, dass der Behandlungsbehälter Nachschub benötigt, wird das Wasser von der Pumpe 8 über die Leitung 13 in den Einlass 14 des Behandlungsbehälters 9 gepumpt. Es gelangt durch das Filter 15 in das Innere des Behandlungsbehälters 9 und füllt diesen auf, bis das Wasser eine gewünschte Höhe entsprechend der Linie 16 erreicht. Dies wird ebenfalls durch einen Sensor festgestellt. Dann schaltet die Steuerung die Pumpe 8 ab. In dem Behandlungsbehälter 9 wird jetzt das Wasser behandelt. Beispielsweise kann die Behandlung in der Weise erfolgen, wie dies in der eingangs genannten EP 732457 beschrieben ist. Nach einer bestimmten Zeit, die sich aus der Größe des Behandlungsbehälters 9 und den verwendeten Materialien sowie der Verunreinigung des Grauwassers ermitteln lässt, ist das Wasser in dem Behandlungsbehälter 9 ausreichend gesäubert beziehungsweise aufbereitet, so dass es jetzt wieder verwendet werden kann. Zu diesem Zweck wird die Pumpe 17 eingeschaltet, die das Wasser aus einem mittleren Bereich über die Leitung 18 und die Entkeimungsanlage 19 in den Betriebsbehälter 10 pumpt.

Sobald der Wasserspiegel 16 in dem Behandlungsbehälter 9 auf einen bestimmten Bereich abgesunken ist, wird die Pumpe 17 ausgeschaltet und wieder Wasser aus dem Sammelbehälter 1 nachgepumpt.

Die Verweildauer des Wassers in dem Behandlungsbehälter 9 wird dadurch geregelt, dass die Pumpe 17 und die Pumpe 8 durch die Steuerung betätigt werden.

In dem Betriebsbehälter 10 sammelt sich jetzt Wasser an. Dieses Wasser kann durch Einschalten der Pumpe 22 entnommen und den Verbrauchern über die Leitung 23 zugeführt werden.

Die in dem Behandlungsbehälter 9 als Sediment abgesetzten Verschmutzungen sammeln sich in dem trichterförmigen unteren Bereich an. Sobald hier eine größere Menge vorhanden ist, wird das Ventil 11 geöffnet, und das Sediment von dem in dem Behälter 9 vorhandenen Wasser in den Sammelbehälter 1 ausgespült. Nach Schließen des Ventils 11 wird der Behälter 9 wieder gefüllt. Das in den Sammelbehälter 1 gelangte Wasser kann über die Pumpe 8 wieder verwendet oder der Kanalisation zugeführt werden.

Das sich auf dem Boden 3 ansammelnde Sediment wird bei jedem solchen Spülvorgang in Richtung auf die tiefste Stelle bewegt, wo es mithilfe der Pumpe 4 in die Kanalisation gespült werden kann.

Es hat sich herausgestellt, dass eine Verbesserung der Wasserqualität des Betriebswassers erreicht werden kann, wenn der Aufenthalt des Wassers in dem Behandlungsbehälter 9 ausreichend lang ist. Dies kann durch die beschriebenen Maßnahmen erreicht werden.

Stellt sich während des Betriebs heraus, dass Betriebswasser entnommen werden soll, der Betriebsbehälter 10 aber nicht ausreichend Wasser enthält und gleichzeitig eine Nachlieferung aus dem Behandlungsbehälter 9 wegen einer nicht ausreichend langen Verweildauer nicht möglich ist, so kann in den Betriebsbehälter 10 über die Leitung 26 Trinkwasser nachgeführt werden. Die Anlage arbeitet also weiter.

Stellt sich andererseits heraus, dass der Behandlungsbehälter 9 wegen des Fehlens von Grauwasser nicht ausreichend gefüllt werden kann, so kann über die Abzweigung 25 Betriebswasser in den Behandlungsbehälter 9 eingeführt werden. Falls auch das Betriebswasser nicht ausreichend vorhanden ist, kann in den Betriebsbehälter 10 wieder, wie bereits beschrieben, Trinkwasser nachgeführt werden.

Falls sich in den Betriebsbehälter 10 ebenfalls Sedimente absetzen, können diese ebenfalls mithilfe des Auslasses aus dem Trichter und das Ventil 12 in den Sammelbehälter 1 ausgespült werden.

Dadurch, dass die Spülung des Behandlungsbehälters und des Betriebswasserbehälters in den Sammelbehälter erfolgt, geht auch dieses Spülwasser nicht verloren, da es in den Kreislauf zurückgeführt werden kann. Dadurch wird weiterhin die "Nutzungs- bzw. Erntekapazität" gegenüber den bekannten Anlagen erhöht.

## Patentansprüche

1. Anlage zur Wiederverwendung von Grauwasser, mit
1.1 einem einen Einlass (2) für das wieder zu verwendende Grauwasser aufweisenden Sammelbehälter (1)
1.2 einem aus dem Sammelbehälter (1) zu versorgenden Behandlungsbehälter (9) zur mechanischen und/oder biologischen Behandlung des wieder zu verwendenden Grauwassers, sowie mit
1.3 einem mit einem Ausgang des Behandlungsbehälters (9) verbundenen Betriebswasserbehälter (10), der
1.3.1 zur Entnahme des wiederzuverwendenden Betriebswassers ausgebildet ist, wobei
1.4 der Sammelbehälter (1) auf einem tieferen Niveau als die beiden anderen Behälter (9, 10) angeordnet ist,
**dadurch gekennzeichnet, dass**
1.5 der Sammelbehälter unmittelbar unterhalb der beiden jeweils auf gleicher Höhe stehenden anderen Behälter (9, 10) angeordnet ist.

2. Anlage nach Anspruch 1, bei der der Sammelbehälter (1) einen mit einer Pumpe (4) versehenen Auslass zur Kanalisation aufweist.

3. Anlage nach einem der vorhergehenden Ansprüche, bei der der Behandlungsbehälter (9) einen ventilgesteuerten in den Sammelbehälter (1) führenden Auslass aufweist.

4. Anlage nach einem der vorhergehenden Ansprüche, bei der der Betriebsbehälter (10) einen ventilgesteuerten in den Sammelbehälter (1) führenden Auslass aufweist.

5. Anlage nach einem der vorhergehenden Ansprüche, bei dem zwischen dem Sammelbehälter (1) und dem Behandlungsbehälter (9) eine mit einer Pumpe (8) versehene Versorgungsleitung (13) vorgesehen ist, wobei die Pumpe (8) mit einer Steuereinrichtung verbunden ist.

6. Anlage nach einem der vorhergehenden Ansprüche, bei der zwischen dem Behandlungsbehälter (9) und dem Betriebsbehälter (10) eine mit einer Pumpe (17) versehene Versorgungsleitung (18) vorgesehen ist, wobei die Pumpe (17) mit einer Steuereinrichtung verbunden ist.

7. Anlage nach Anspruch 6, bei der die Versorgungsleitung (18) zwischen dem Behandlungsbehälter (9) und dem Betriebsbehälter (10) über eine Entkeimungsanlage (19) führt.

8. Anlage nach einem der vorhergehenden Ansprüche, bei der der Betriebsbehälter (10) einen Trinkwassereinlass (26) aufweist.

9. Anlage nach einem der Ansprüche 2 bis 8, bei der der Sammelbehälter (1) einen in Richtung auf den zur Kanalisation führenden Auslass abfallenden Boden (3) aufweist.

10. Verfahren zur Wiederverwendung von Grauwasser, bei dem
10.1 Grauwasser in einen Sammelbehälter (1) eingebracht wird,
10.2 aus dem Sammelbehälter (1) in einen Behandlungsbehälter (9) gepumpt wird,
10.3 aus dem Behandlungsbehälter (9) in einen Betriebsbehälter (10) gepumpt wird,
10.4 aus dem es zur Wiederverwendung entnommen wird, wobei
10.5 die Verweildauer in dem Behandlungsbehälter (9) durch Unterbrechen der Zufuhr aus dem Sammelbehälter (1) und/oder der Entnahme in den Betriebsbehälter (10) gesteuert wird
**dadurch gekennzeichnet, dass**
10.6 sich in dem Behandlungsbehälter (9) bildendes Sediment durch Öffnen eines Ventils (11) in den Sammelbehälter (1) gespült wird und/oder sich in dem Betriebsbehälter (10) bildendes Sediment durch Öffnen eines Ventils (12) in den Sammelbehälter (1) gespült wird.

11. Verfahren nach Anspruch 10, bei dem nicht wieder zu verwendendes Grauwasser aus dem Sammelbehälter (1) direkt in die Kanalisation gepumpt wird und/oder bei dem bei Bedarf aus dem Betriebsbehälter (10) stammendes Wasser in den Behandlungsbehälter (9) gepumpt wird.

12. Verfahren nach Anspruch 10 oder 11, bei dem bei Bedarf Trinkwasser in den Betriebsbehälter (10) eingelassen wird.

13. Verfahren nach einem der Ansprüche 10 bis 12, bei dem das aus dem Behandlungsbehälter (9) in den Betriebsbehälter (10) gepumpte Wasser entkeimt wird.

## Claims

1. Assembly for reusing greywater, having
1.1 a collection tank (1) having an inlet (2) for the greywater to be reused,
1.2 a treatment tank (9) to be supplied from the collection tank (1) for mechanical and/or biological treatment of the greywater to be reused, and
1.3 a service water tank (10) connected to an outlet of the treatment tank (9), which is
1.3.1 designed for removal of the service water to be reused, where
1.4 the collection tank (1) is arranged at a lower level than the two other tanks (9, 10),
**characterized in that**
1.5 the collection tank (1) is arranged directly underneath the two other tanks (9, 10) which are at the same level.

2. Assembly according to Claim 1, in which the collection tank (1) has an outlet provided with a pump (4) to the sewer system.

3. Assembly according to any of the preceding claims, in which the treatment tank (9) has a valve-controlled outlet leading into the collection tank (1).

4. Assembly according to any of the preceding claims, in which the service water tank (10) has a valve-controlled outlet leading into the collection tank (1).

5. Assembly according to any of the preceding claims, in which a supply line (13) provided with a pump (8) is provided between the collection tank (1) and the treatment tank (9), said pump (8) being connected to a control device.

6. Assembly according to any of the preceding claims, in which a supply line (18) provided with a pump (17) is provided between the treatment tank (9) and the service water tank (10), said pump (17) being connected to a control device.

7. Assembly according to Claim 6, in which the supply line (18) passes via a sterilizing unit (19) between the treatment tank (9) and the service water tank (10).

8. Assembly according to any of the preceding claims, in which the service water tank (10) has a drinking water inlet (26).

9. Assembly according to any of Claims 2 to 8, in which the collection tank (1) has a bottom (3) sloping downwards in the direction of the outlet leading to the sewer system.

10. Method for reusing greywater, in which
10.1 greywater is supplied to a collection tank (1),
10.2 is pumped out of the collection tank (1) into a treatment tank (9),
10.3 is pumped out of the treatment tank (9) into a service water tank (10),
10.4 from where it is removed for reuse, where
10.5 the dwell time inside the treatment tank (9) is controlled by interrupting the supply from the collection tank (1) and/or interrupting removal into the service water tank (10),
**characterized in that**
10.6 sediment forming in the treatment tank (9) is flushed into the collection tank (1) by opening a valve (11), and/or sediment forming in the service water tank (10) is flushed into the collection tank (1) by opening a valve (12).

11. Method according to Claim 10, in which greywater not to be reused is pumped out of the collection tank (1) directly into the sewer system and/or in which water coming from the service water tank (10) is pumped if required into the treatment tank (9).

12. Method according to Claim 10 or 11, in which drinking water is supplied if required to the service water tank (10).

13. Method according to any of Claims 10 to 12, in which the water pumped out of the treatment tank (9) into the service water tank (10) is sterilized.

## Revendications

1. Installation de réutilisation d'eau grise, comprenant
1.1 une cuve collectrice (1) présentant une entrée (2) pour l'eau grise à réutiliser,
1.2 une cuve de traitement (9) devant être alimentée depuis la cuve collectrice (1) et destinée à un traitement mécanique et/ou biologique de l'eau grise à réutiliser, ainsi
1.3 qu'une cuve d'eau de service (10) reliée à une sortie de la cuve de traitement (9) et qui
1.3.1 est conçue pour prélever l'eau de service à réutiliser, sachant que
1.4 la cuve collectrice (1) est placée à un niveau inférieur à celui des deux autres cuves (9, 10),
**caractérisée en ce que**
1.5 la cuve collectrice (1) est directement placée sous les deux autres cuves (9, 10) respectivement situées à la même hauteur.

2. Installation selon la revendication 1, dans laquelle la cuve collectrice (1) présente une sortie vers l'égout munie d'une pompe (4).

3. Installation selon l'une des revendications précédentes, dans laquelle la cuve de traitement (9) présente une sortie commandée par vanne menant à la cuve collectrice (1).

4. Installation selon l'une des revendications précédentes, dans laquelle la cuve de service (10) présente une sortie commandée par vanne menant à la cuve collectrice (1).

5. Installation selon l'une des revendications précédentes, dans laquelle est prévue entre la cuve collectrice (1) et la cuve de traitement (9) une conduite d'alimentation (13) munie d'une pompe (8), la pompe (8) étant reliée à un dispositif de commande.

6. Installation selon l'une des revendications précédentes, dans laquelle est prévue entre la cuve de traitement (9) et la cuve de service (10) une conduite d'alimentation (18) munie d'une pompe (17), la pompe (17) étant reliée à un dispositif de commande.

7. Installation selon la revendication 6, dans laquelle la conduite d'alimentation (18) entre la cuve de traitement (9) et la cuve de service (10) passe par une installation de stérilisation (19).

8. Installation selon l'une des revendications précédentes, dans laquelle la cuve de service (10) présente une entrée d'eau potable (26).

9. Installation selon l'une des revendications 2 à 8, dans laquelle la cuve collectrice (1) présente un fond (3) incliné en direction de la sortie menant à l'égout.

10. Procédé de réutilisation d'eau grise, dans lequel
10.1 de l'eau grise est introduite dans une cuve collectrice (1),
10.2 est pompée depuis la cuve collectrice (1) dans une cuve de traitement (9),
10.3 est pompée depuis la cuve de traitement (9) dans une cuve de service (10),
10.4 dans laquelle elle est prélevée pour réutilisation, sachant que
10.5 la durée de séjour dans la cuve de traitement (9) est commandée par interruption de l'alimentation depuis la cuve collectrice (1) et/ou par interruption du prélèvement vers la cuve de service (10), **caractérisé en ce que**
10.6 le sédiment se formant dans la cuve de traitement (9) est évacué dans la cuve collectrice (1) par ouverture d'une vanne (11) et/ou que le sédiment se formant dans la cuve de service (10) est évacué dans la cuve collectrice (1) par ouverture d'une vanne (12).

11. Procédé selon la revendication 10, dans lequel l'eau grise ne devant pas être réutilisée est directement pompée dans l'égout depuis la cuve collectrice (1) et/ou dans lequel l'eau provenant de la cuve de service (10) est au besoin pompée dans la cuve de traitement (9).

12. Procédé selon la revendication 10 ou 11, dans lequel de l'eau potable est au besoin introduite dans la cuve de service (10).

13. Procédé selon l'une des revendications 10 à 12, dans lequel l'eau pompée dans la cuve de service (10) depuis la cuve de traitement (9) est stérilisée.
